# DEMANDE DE BREVET EUROPEEN

(11) **EP 4 199 289 A1**
(43) Date de publication de la demande: **21.06.2023**
(21) Numéro de dépôt: 22212622.9
(22) Date de dépôt: 09.12.2022
(51) Int. Cl.: H02J 1/10, H02J 3/36, H02J 3/38, H02J 5/00, H02J 3/00

(54) **ARCHITECTURE ÉLECTRIQUE COMPRENANT UNE INSTALLATION PHOTOVOLTAÏQUE LINÉAIRE CONSTITUÉE DE PLUSIEURS GROUPES DE PANNEAUX PHOTOVOLTAÏQUES ET D'UN RÉSEAU DE COURANT CONTINU (DC), RELIÉE À UN RÉSEAU DE TRANSPORT ET/OU DE DISTRIBUTION ALTERNATIF (AC) AVEC TRANSPORT POSSIBLE DE LA PUISSANCE DU RÉSEAU AC PAR LE RÉSEAU DC**

(30) Priorité: 20.12.2021 FR 2114044
(71) Demandeur: COMMISSARIAT A L'ENERGIE ATOMIQUE ET AUX ENERGIES ALTERNATIVES, 75015 Paris (FR)
(72) Inventeur: TRAN, Quoc-Tuan, 38054 GRENOBLE CEDEX 09 (FR)
(74) Mandataire: Cabinet Nony

(57) **Abrégé**

Architecture électrique comprenant une installation photovoltaïque linéaire constituée de plusieurs groupes de panneaux photovoltaïques et d'un réseau de courant continu (DC), reliée à un réseau de transport et/ou de distribution alternatif (AC) avec transport possible de la puissance du réseau AC par le réseau DC.

L'invention consiste essentiellement à mettre en place une architecture avec au moins une installation linéaire PV avec un réseau DC et d'interconnecter ce sous-ensemble en au moins deux points distincts d'interconnexion avec un réseau électrique AC de préférence existant. Chaque point d'interconnexion à un nœud du réseau AC est un convertisseur en source de tension VSC qui peut injecter de 0 à 100% de la puissance maximale P des installations linéaires PV.

## Description

### Domaine technique

La présente invention concerne le domaine général des réseaux électriques.

L'invention a plus particulièrement trait à l'interconnexion entre un réseau de transport et/ou de distribution alternatif (AC) et une installation photovoltaïque linéaire.

Par « installation linéaire PV », on entend ici et dans le cadre de l'invention, des panneaux photovoltaïques agencés par groupes selon une surface qui s'étend principalement selon une ligne et de préférence sur ou le long des sols déjà construits/aménagés par l'homme, comme les pistes cyclables, les bordures d'autoroute, les voies ferrées...ou naturels, par exemple non utilisables à des fins agricoles.

Par « services systèmes », on entend ici et dans le cadre de l'invention, les solutions qui assurent ainsi l'équilibre permanent entre production et consommation électrique. Ainsi, les services systèmes sont des services nécessaires pour tout gestionnaire de réseau et permettent d'assurer un fonctionnement fiable, stable et efficace du réseau électrique.

Dans l'ensemble de la demande on utilise les acronymes suivantes à des fins de simplicité :
AC : acronyme anglo-saxon de « Alternative Current » qui désigne le courant alternatif (AC);
DC : acronyme anglo-saxon de « Direct Current » qui désigne le courant continu (CC) ;
MVDC : acronyme anglo-saxon de « Medium Voltage Direct Current» qui désigne le courant continu de moyenne tension, typiquement dans la gamme de 30 à 150 kilovolts (kV) ;
HVDC : acronyme anglo-saxon de « High Voltage Direct Current» qui désigne le courant continu de haute tension, typiquement au-delà de 150 kilovolts (kV) ;
VSC: acronyme anglo-saxon de « Voltage Source Converter» qui désigne un convertisseur fonctionnant en source de tension ;
MMC: acronyme anglo-saxon de « Modular Multi-Level Converter» qui désigne un convertisseur à modules multi-étage.

### Technique antérieure

Le contexte de forte demande en énergies renouvelables (EnR) avec la nécessité d'un réseau électrique dédié, typiquement jusqu'à 30% en 2030 en France et d'expansion de la part du solaire dans les EnR, nécessite d'installer de nombreuses centrales solaires photovoltaïques (PV) au sol, de grandes puissances, typiquement de l'ordre de quelques centaines MW chacune.

La question des terrains disponibles pour cette technologie PV devient donc cruciale. En effet, au regard des surfaces requises, le déploiement des grandes centrales solaires PV au sol peut engendrer des conflits d'usage avec les terres agricoles et affecter la biodiversité. Par exemple, la centrale solaire PV la plus puissante en France à ce jour, d'une puissance égale à 300 MW, est implantée à Cestas, près de Bordeaux, sur 260 hectares.

Trouver de nouveaux terrains pour développer des projets de centrale solaires PV est donc devenu la principale préoccupation des développeurs d'énergies EnR.

De plus, devant la volonté des autorités publiques de limiter l'usage de grands espaces agricoles pour la réalisation de telles centrales PV au sol, des alternatives écologiquement acceptables doivent être trouvées.

Une solution qui répond à cette problématique consiste à profiter de surfaces dites linéaires, sous forme des sols déjà aménagés/construits par l'homme, comme les pistes cyclables, les bordures d'autoroute, les voies ferrées...ou naturels, non utilisables à des fins agricoles, comme le long des cours d'eau et qui s'étendent sur des dizaines, voire des centaines de kilomètres, pour installer des systèmes PV de fortes puissances. Ces surfaces potentielles ont pour avantages d'être déjà très présentes, exploitables directement en l'état pour y installer des panneaux PV et pas chères puisque ne nécessitant pas l'acquisition de terrains.

La mise en place de nouveaux types d'installations/centrales PV linéaires va donc ouvrir de nouvelles opportunités dans la stratégue de développement du PV. Dans le monde, il existe déjà quelques projets d'installation PV linéaires, mais qui sont à priori de petite puissance, typiquement quelques kW. De plus, très peu d'articles sur la conception de ces installations PV linéaires ont été publiés.

Or, passer de centrales PV occupant des dizaines ou centaines d'hectares à des installations PV linéaires s'étendant sur des dizaines d'hectomètres ou kilomètres implique de repenser toute l'architecture du réseau électrique afférente.

De manière générale, les stratégies de l'Union Européenne en matière de développement d'énergies EnR à grande échelle mettent en évidence les rôles importants de l'infrastructure électrique et le couplage sectoriel, i.e. l'interconnexion entre le gaz et l'électricité, pour parvenir à une décarbonation profonde de l'économie.

Il existe donc un besoin de proposer une solution technique optimisée d'architecture électrique qui permette le raccordement massif des installations PV linéaires à l'infrastructure électrique existante, tout en fournissant des services allant au-delà de la simple injection de la production PV.

Le but de l'invention est donc de répondre au moins en partie à ce besoin.

### Exposé de l'invention

Pour ce faire, l'invention concerne, sous l'un de ses aspects, une architecture électrique comprenant :
- au moins une d'installation linéaires comprenant au moins un groupe de panneaux photovoltaïques (PV), adaptée pour produire une puissance totale maximale P, et
un réseau de courant continu (DC) comprenant au moins un bus auquel sont connectées en parallèle électrique le(s) groupe(s) de panneaux PV par l'intermédiaire chacune d'un convertisseur DC/DC,
- un réseau de transport et/ou de distribution alternatif (AC),
- au moins deux convertisseurs en source de tension (VSC) ; un des deux convertisseurs reliant le bus DC à un premier nœud du réseau AC, l'autre des deux convertisseurs reliant le bus DC à un deuxième nœud du réseau AC, distinct du premier nœud, chacun des convertisseurs VSC étant adapté pour injecter de 0 à une valeur supérieure à 100% de la puissance P dans le réseau AC, au moins un des convertisseurs étant bidirectionnel,
- un système de contrôle adapté pour déterminer la puissance à transporter entre le réseau DC depuis les convertisseurs VSC et le réseau AC, en fonction des besoins et/ou des régimes de fonctionnement de ce dernier.

Avantageusement, les convertisseurs VSC sont des convertisseurs modulaire multiniveaux (MMC) et/ou bidirectionnels et/ou dimensionnés pour assurer l'absorption de la partie de puissance du réseau AC.

Les modes de contrôle possibles des convertisseurs VSC sont:
- Vac/f : Contrôle de la tension au point de connexion et de la fréquence du réseau AC
- Vac-phi : Contrôle de la tension au point de connexion du réseau AC et du déphasage
- Vdc-phi : Contrôle de la tension du bus DC et du déphasage
- Vdc-Q : Contrôle de la tension du bus DC et de puissance réactive
- PWM-phi : Contrôle de la modulation PWM de l'onduleur VSC et du déphasage
- P-Vac : Contrôle de puissance injectée et de la tension au point de connexion du réseau AC
- P-Q : Contrôle de puissance active et réactive injectées au réseau AC
- Vdc-Vac : Contrôle de la tension du bus DC et de la tension au point connecté du réseau AC
- P-cos(f) : Contrôle de puissance active injectée au réseau AC et du facteur de puissance
- Vdc-cos(f) : Contrôle de la tension au bus DC et du facteur de puissance...

Parmi tous ces modes de contrôle, les modes de contrôles P-Q ; P-Vac ; Vac/f ; Vdc-Q sont privilégiés pour la fonction de transport et de services selon l'invention.

Selon un mode de réalisation avantageux, le réseau DC de l'installation linéaire comprend au moins un bus de haute tension en courant continu (HVDC) relié au bus de moyenne tension en courant continu (MVDC) et à un convertisseur en source de tension (VSC) relié à un nœud du réseau AC.

Selon un autre mode de réalisation avantageux, le réseau DC absorbe à l'un des premier ou deuxième nœuds, au moins une partie de la puissance du réseau AC en cas de défaillance de celui-ci entre le premier et le deuxième nœuds, par exemple en cas de perte d'une ligne AC.

Avantageusement, les convertisseurs VSC sont des convertisseurs modulaire multiniveaux (MMC) et/ou bidirectionnels et/ou dimensionnés pour assurer l'absorption de la partie de puissance du réseau AC.

Selon un autre mode de réalisation avantageux, le bus auquel sont directement connectées en parallèle électrique le(s) groupes de panneaux PV est un bus de moyenne tension en courant continu (MVDC).

Le bus MVDC peut être avantageusement connecté au réseau de distribution AC et/ou réseau de transport AC.

Selon une variante avantageuse, le réseau DC de l'installation linéaire PV comprend un bus de haute tension en courant continu (HVDC) et connecté seulement au réseau de transport AC.

Avantageusement, les convertisseurs VSC sont des convertisseurs modulaires multiniveaux (MMC).

Selon une configuration avantageuse, le bus auquel sont directement connectés en parallèle électrique le(s) groupe(s) de panneaux PV est un bus de moyenne tension en courant continu (MVDC).

Selon une variante de réalisation avantageuse, l'architecture comprend plusieurs charges réparties géographiquement, telles que des stations de recharge de véhicules électriques à grande puissance ou des électrolyseurs pour l'alimentation de véhicules fonctionnant à l'hydrogène, reliées chacune par l'intermédiaire d'un convertisseur DC/DC au bus MVDC.

Selon une autre variante de réalisation avantageuse, l'architecture comprend plusieurs moyens de stockage électrique répartis géographiquement, tels que des batteries, reliés chacun par l'intermédiaire d'un convertisseur DC/DC au bus MVDC.

Selon une autre variante de réalisation avantageuse, l'architecture comprend d'autres sources de courant réparties géographiquement, telles que des éoliennes, reliées chacune par l'intermédiaire d'un convertisseur DC/DC au bus MVDC.

Selon un mode de réalisation avantageux, le réseau DC de l'installation linéaire PV comprend au moins un bus de haute tension en courant continu (HVDC), relié au bus de moyenne tension en courant continu (MVDC) et à un convertisseur en source de tension (VSC) relié à un nœud du réseau AC.

Le système de contrôle peut avantageusement être connecté au système de contrôle et d'acquisition de données en temps réel (SCADA) du réseau AC. Cela permet de différencier la puissance à absorber par l'un ou l'autre des au moins deux nœuds d'injection.

Selon un autre mode de réalisation avantageux, l'architecture comprend des moyens de mesure de tension et/ou de fréquence aux premier et deuxième nœuds, reliés au système de contrôle de sorte qu'il détermine la puissance entre la puissance à transporter entre le réseau DC depuis les convertisseurs VSC et le réseau AC en fonction des mesures effectuées.

Ainsi, l'invention consiste essentiellement à mettre en place un système PV linéaire, comprenant des groupes de panneaux PV et un réseau DC, et d'interconnecter ce sous-ensemble en au moins deux points d'interconnexion avec un réseau électrique AC de préférence existant. Chaque point d'interconnexion à un nœud du réseau AC est un convertisseur en source de tension VSC qui peut récupérer de la puissance du réseau AC pour la faire transporter par le réseau DC.

L'invention consiste donc à répartir la puissance à transporter entre le réseau DC depuis les convertisseurs VSC et le réseau AC, en fonction des besoins et/ou des régimes de fonctionnement de ce dernier.

Selon une configuration avantageuse, le réseau DC absorbe au moins une partie de la puissance du réseau AC en cas de défaillance de celui-ci, par exemple en cas de perte d'une ligne.

Contrairement à une centrale PV selon l'état de l'art qui est localisée en un point précis du réseau électrique et donc en capacité d'injecter seulement en ce point, l'architecture selon l'invention avec une installation PV linéaire répartie sur une grande étendue géographique permet une interconnexion en plusieurs points distants du réseau électrique.

L'architecture selon l'invention permet de conserver et augmenter la fiabilité et une résilience élevées du réseau électrique existant tout en élargissant sa capacité à intégrer de grandes quantités d'énergie renouvelable (EnR) à l'avenir par le biais des installations linéaires PV.

Au final, une architecture selon l'invention présente de nombreux avantages parmi lesquels on peut citer :
- du fait du choix des installations linéaires,
   une réduction considérable de l'occupation du sol ainsi qu'une réduction de construction de lignes HVAC ;
   une augmentation de la capacité de pénétration des systèmes PV au réseau électrique AC existant ;
   une réduction de la variation de production PV à cause d'intermittence grâce à l'agrégation des installations linéaire sur une grande distance ;
- l'amélioration de la flexibilité du réseau, par la possibilité d'échanger de l'énergie dans les deux sens entre un réseau DC et un réseau AC ;
- une grande fiabilité et résilience ;
- une amélioration de la stabilité du réseau AC ;
- la possibilité de maintien de continuité de service en cas de défaut ou de séparation du réseau AC ;
- une simplification de la gestion énergétique ;
- une facilité à connecter des systèmes DC comme les stockages ou/et des stations de recharge rapide à grande puissance pour les véhicules électriques ou/et des électrolyseurs et des piles à combustible au réseau DC des installations linéaires ;
- la possibilité de couplage avec des fermes éoliennes offshore ou on-shore...
- la possibilité d'une protection efficace enter un réseau AC et un réseau DC ;
- la diminution de pertes totales du réseau AC par la répartition optimale de puissance. D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 illustre schématiquement une architecture électrique selon l'invention telle qu'elle pourrait être implantée dans la région sud-Est de la France.
[Fig 2] la figure 2 est une vue synoptique de l'architecture électrique selon l'invention.
[Fig 3] la figure 3 est une vue schématique du réseau test « New-England IEEE 39 nœuds » sur lequel les tests d'injection de puissance du réseau DC selon l'architecture électrique de l'invention ont été réalisés.
[Fig 4A], [Fig 4B] les figure 4A et 4B illustrent les répartitions de puissance sur des lignes du réseau New-england et deux convertisseurs VSC d'un réseau DC avec six installations linéaires PV connecté au réseau New-england, suite à un test de perte de ligne.
[Fig 5],[Fig 6],[Fig 7] les figures 5, 6, 7 illustrent respectivement la variation de puissance de l'angle rotorique et de vitesse des générateurs (machines synchrones) du réseau New-england sans l'architecture selon l'invention, suite à un test de court-circuit.
[Fig 8], [Fig 9] les figures 8 et 9 illustrent respectivement la variation de tension à un nœud et de fréquence du réseau New-england sans l'architecture selon l'invention, suite au test de court-circuit.
[Fig 10] la figure 10 illustre la variation de puissance et de puissance réactive aux deux convertisseurs VSC de l'architecture selon l'invention avec le réseau New-england et selon une première configuration d'injection de puissance différenciée aux deux VSC, suite à un test de court-circuit.
[Fig 11], [Fig 12], [Fig 13] les figures 11, 12, 13 illustrent respectivement la variation de puissance de l'angle rotorique et de vitesse des générateurs (machines synchrones) du réseau New-england avec l'architecture selon l'invention et selon la première configuration d'injection de puissance différenciée aux deux convertisseurs VSC, suite au test de court-circuit.
[Fig 14], [Fig 15] les figures 14 et 15 illustrent respectivement la variation de tension à un nœud et de fréquence du réseau New-england avec l'architecture selon l'invention et selon la première configuration d'injection de puissance différenciée aux deux convertisseurs VSC, suite au test de court-circuit.
[Fig 16] illustre la variation de puissance aux deux convertisseurs VSC de l'architecture selon l'invention avec le réseau New-england et selon une deuxième configuration d'injection de puissance différenciée aux deux VSC, suite à un test de court-circuit.
[Fig 17], [Fig 18], [Fig 19] les figures 17, 18, 19 illustrent respectivement la variation de puissance de l'angle rotorique et de vitesse des générateurs (machines synchrones) du réseau New-england avec l'architecture selon l'invention et selon la deuxième configuration d'injection de puissance différenciée aux deux convertisseurs VSC, suite au test de court-circuit.
[Fig 20], [Fig 21] les figures 20 et 21 illustrent respectivement la variation de tension à un nœud et de fréquence du réseau New-england avec l'architecture selon l'invention et selon la deuxième configuration d'injection de puissance différenciée aux deux convertisseurs VSC, suite au test de court-circuit.

### Description détaillée

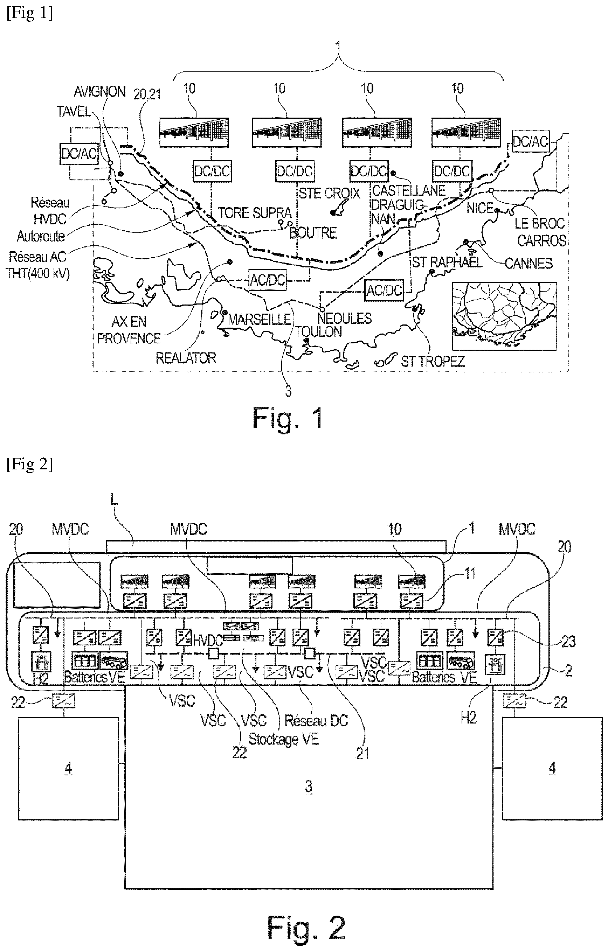

La figure 1 montre une architecture selon l'invention telle qu'elle pourrait être implantée dans la région sud-Est de la France.

Comme illustré, cette architecture électrique comprend une pluralité 1 de groupes de panneaux photovoltaïques (PV) 10, adapté pour produire une puissance totale maximale P. Ces groupes de panneaux 10 sont répartis sur des centaines de kilomètre dans cette région en étant agencés sur des surfaces au sol allongées sur des terrains déjà construits par l'homme, tels que le long des bordures de chemin de fer, des autoroutes...

Tous ces groupes de panneaux sont connectées en parallèle électrique par à au moins un bus 20, 21 d'un réseau de courant continu (DC), pour former une seule installation PV linéaire. Cette installation PV linéaire est elle-même connectée au réseau de transport 3 et/ou de distribution 4 alternatif (AC) déjà existant dans cette région. Tous les groupes de panneaux PV sont donc connectés entre eux par au moins un bus 20, 21 DC.

La figure 2 montre plus en détail les composants et les modes de connexions possibles selon un mode de réalisation d'une telle architecture.

Sur cette figure 2, les groupes de panneaux PV sont répartis le long d'une ligne L au sol. La pluralité 1 de ces groupes PV peut produire une puissance totale maximale P.

L'installation PV linéaire comprend la pluralité des groupes de panneaux ainsi que le réseau DC 2, qui comprend ici plusieurs bus MVDC 20 auxquels sont connectées en parallèle électrique les installations linéaires 10, chacune par l'intermédiaire d'un convertisseur DC/DC 11.

Le réseau DC comprend également plusieurs bus HVDC 21 connectés chacun à un ou plusieurs des bus MVDC 20. Les bus HVDC 21 peuvent transporter le courant continu sur l'ensemble du réseau DC.

Chaque bus MVDC 20 ou bus HVDC 21 est relié à un nœud d'un réseau de transport AC 3 ou à celui d'un réseau de distribution AC par l'intermédiaire d'un convertisseur en source de tension 22. Au moins un des convertisseurs est bidirectionnel, pour permettre un passage de puissance du réseau AC vers le réseau DC.

De préférence, les convertisseurs VSC 22 sont des convertisseurs modulaires multiniveaux (MMC).

Chacun des convertisseurs VSC 22 est adapté pour injecter de 0 à 100% de la puissance P dans le réseau AC. Au moins un des convertisseurs est adapté pour injecter plus de 100% de la puissance P dans le réseau AC.

Selon l'invention, le système de contrôle de l'architecture est adapté pour répartir la puissance à transporter entre le réseau DC depuis les convertisseurs VSC 22 et le réseau AC, en fonction des besoins et/ou des régimes de fonctionnement de ce dernier.

Le système de contrôle peut être intégré au système de contrôle et d'acquisition de données en temps réel (SCADA) du réseau AC.

Dans une configuration avantageuse, le réseau DC absorbe au moins une partie de la puissance du réseau AC en cas de défaillance de celui-ci, par exemple en cas de perte d'une ligne AC. Autrement dit, le réseau DC de l' installation linéaire PV permet d'éviter la congestion du réseau.

En outre, le système de contrôle permet à l'architecture électrique de contribuer au moins à une partie des services systèmes du réseau AC grâce au réseau DC de l'installation linéaire PV.

Dans le cadre de l'invention, les services système peuvent être résumés ainsi
- S1 : réglage de la fréquence (gestion des réserves de puissance active, réglage primaire, réglage secondaire et réglage tertiaire de fréquence) ;
- S2 : réglage de la tension ;
- S3 : amélioration de la stabilité du réseau (fréquence, tension et angle rotorique ou angulaire des machines synchrones) et réduction des oscillations de puissance ;
- S4 : capacité de support en cas de court-circuit comme firewall et augmentation de la résilience du réseau électrique AC ;
- S5 : gestion des congestions par le contrôle de transit de puissance ;
- S6 : compensation des pertes de transport par la répartition optimale de puissance ;
- S7 : démarrage autonome (« black start » en langage anglo-saxon) ;
- S8: couplage non-synchrone des zones électriques, qui permet de réaliser un couplage entre deux réseaux fonctionnant à fréquences différentes, par exemple à 50Hz et 60Hz ;
- S9 : charge rapide des véhicules électriques le long du réseau DC.

Comme illustré également sur cette figure 2, le réseau DC de l'architecture plusieurs charges réparties géographiquement, telles que des stations de recharge de véhicules électriques (VE) à grande puissance ou des électrolyseurs (H2) pour les véhicules à hydrogène. Chacun de ces charges est reliée directement au bus MVDC 20 par l'intermédiaire d'un convertisseur DC/DC 23.

Le réseau DC peut supporter également plusieurs moyens de stockage électrique répartis géographiquement, tels que des batteries. Chaque moyen de stockage est relié également directement au bus MVDC 20 par l'intermédiaire d'un convertisseur DC/DC 23.

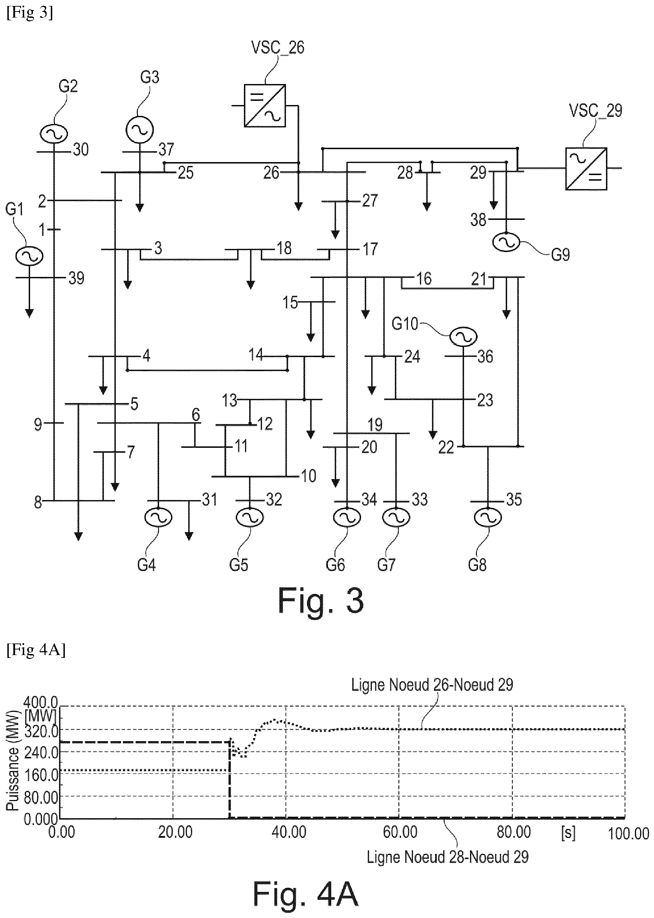

Des validations de l'architecture proposée selon l'invention ont été faites sur le réseau AC de transport test IEEE New-England 39 nœuds. Ce réseau AC, schématisé en figure 3, est une simplification du réseau de New-England dans le nord-est américain. Il comporte 39 nœuds (numérotés de 30 à 39), dont 10 nœuds de production et 46 lignes. Les générateurs aux nœuds de production sont référencés G1 à G10. En particulier, au nœud 29, il y a un générateur G9.

La production et la consommation totales du réseau AC New-England sont respectivement de 6147 MW et 6097 MW.

Les validations effectuées sur ce réseau New-England sont faites avec le logiciel commercialisé sous la dénomination « Powerfactory » par la société Digsilent.

Les hypothèses de test de validation sont faites en considérant un nombre de six groupes de panneaux PV tous reliés en parallèle électrique à un bus DC au sein d'une installation PV linéaire. La puissance maximale de chaque groupe PV est de 50 MW, soit une puissance totale maximale P de 300 MW.

Le bus DC est relié à deux convertisseurs VSC qui sont connectés au réseau New-England AC aux nœuds 26 et 29, référencés respectivement VSC_26 et VSC_29.

Autrement dit, dans les tests A/ et B/ ci-après, ces deux convertisseurs VSC, VSC_26 et VSC_29, assurent l'injection de production des six groupes PV au réseau New-England AC.

Le synoptique de la configuration de test est montré à la figure 3.

Et, à titre comparaison, dans les tests A/ et B/ on considère le réseau AC New-England sans réseau DC, i.e. sans aucune installation linéaire PV ni convertisseur VSC aux nœuds.

### A/ Test de congestion

Dans ce test, on simule la perte d'une ligne du réseau AC, entre les nœuds 28 et 29, puis on observe les différentes puissances respectivement d'une part sur les lignes du réseau AC entre les nœuds 26 et 28 et entre les nœuds 28 et 29 et d'autre part aux convertisseurs VSC_26 et VSC_29.

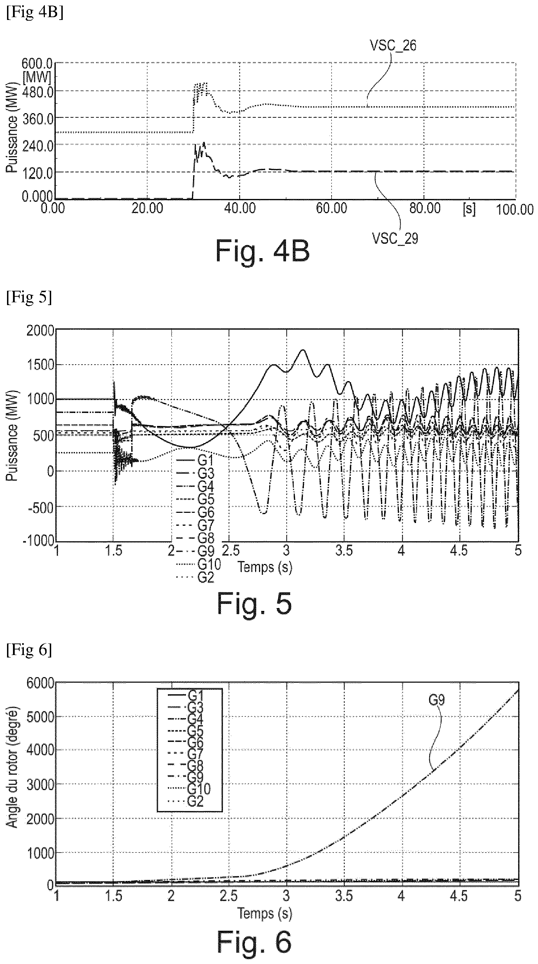

Cette simulation est illustrée sur les courbes des figures 4A et 4B qui montrent les différentes phases successives du test :
i/ Avant la perte de la ligne entre les nœuds 28 et 29, le transit de puissance sur le réseau AC est de 275 MW sur la ligne entre les nœuds 28 et 29 et de 174 MW sur la ligne entre les nœuds 26 et 29.
   La puissance aux convertisseurs VSC26 et VSC29 est de 291 MW et 0 MW, respectivement.
ii/ La perte de la ligne entre les nœuds 28 et 29 est déclenchée au bout d'un moment t égal à 30s.
iii/ Après de perte de cette ligne entre les nœuds 28 et 29, le transit de puissance sur le réseau AC est de 0 MW sur la ligne entre les nœuds 28 et 29 et de 322 MW sur la ligne entre les nœuds 26 et 29.

La puissance aux convertisseurs VSC_26 et VSC_29 est de 408 et 128 MW, respectivement.

A titre de comparaison, sans la présence des groupes PV et des convertisseurs VSC_26 et VSC_29, le transit de puissance sur la ligne entre les nœuds 26 et 29 est 450 MW. Il y a une surcharge sur cette ligne du réseau AC.

Il ressort donc qu'avec la présence des groupes PV et des convertisseurs VSC_26 et VSC_29, le transit de puissance est réparti entre la ligne entre les nœuds 26 et 29 (322 MW) et le réseau DC de l'installation linéaire PV (128 MW).

Par conséquent, le réseau DC de l'installation linéaire PV absorbe une partie importante de puissance. Et la congestion du réseau AC est évitée (S5).

### B/ Test de stabilité

Le test consiste ici en un court-circuit pour étudier la capacité de résistance de l' installation linéaire PV, et donc son influence sur la stabilité du réseau AC.

Au moment t égal à 1,5 s, on simule l'apparition d'un court-circuit sur le nœud 28, qui est éliminé à t égale à 1,7s soit 200 ms après son apparition.

B1/ Sans la présence d'installation linéaire PV et des convertisseurs VSC_26 et VSC_29, on constate que réseau AC devient instable dès l'apparition du court-circuit.

En effet, comme montré sur la figure 5, qui illustre la variation temporelle de la puissance des générateurs (machines synchrones), il y a une oscillation importante de la puissance de tous les générateurs G1 à G10.

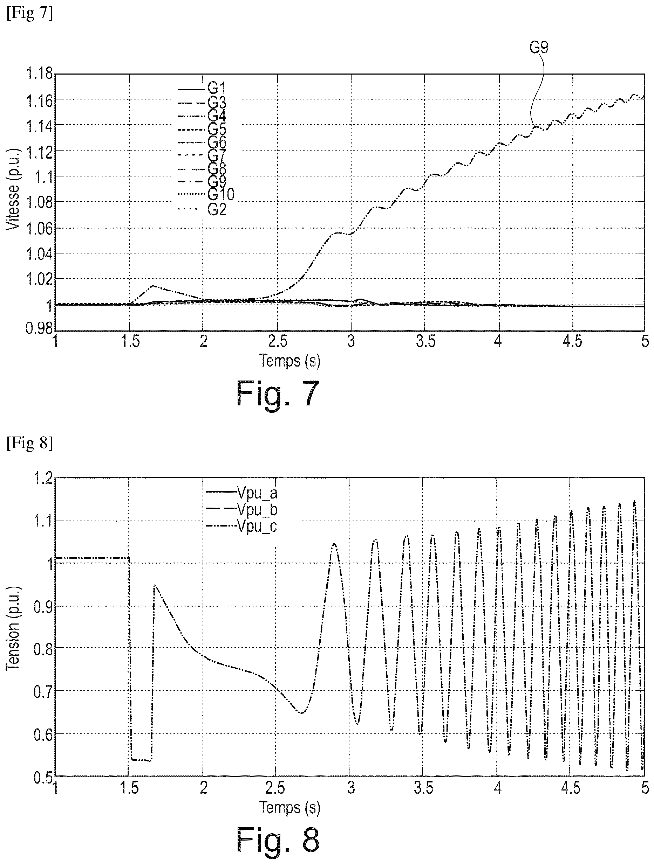

Pour la machine G9, on observe en outre une perte de stabilité angulaire (figure 6), une perte de synchronisation suite à une augmentation de vitesse (figure 7) car G9 se trouve très proche du point de court-circuit (nœud 26).

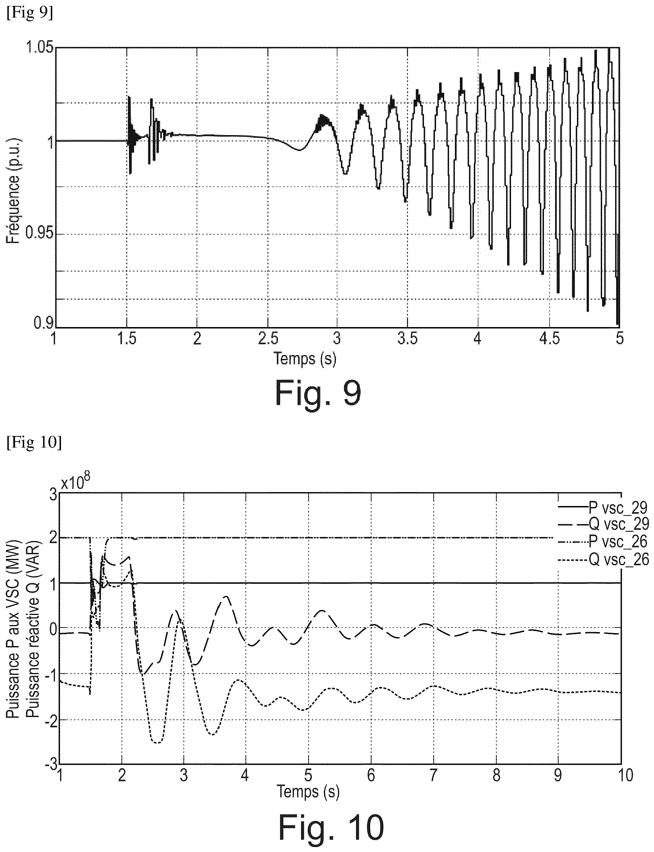

Le réseau AC perd la stabilité de tension et de fréquence, comme illustré respectivement à la figure 8 qui montre la variation de tension en unité réduite (p.u.) au nœud 28 et à la figure 9 qui illustre la variation de fréquence en unité réduite (p.u.).

B2/ On considère ici le réseau DC de l'installation linéaire PV, avec les six groupes PV, qui injecte une puissance avec une répartition de 200 MW sur VSC_26 connecté au nœud 26 et 100 MW sur VSC_29 connecté au nœud 29.

La figure 10 illustre la variation des puissances actives et réactive de VSC_26 connecté au nœud 26 et VSC_29 connecté au nœud 29.

On constate donc, qu'en cas de court-circuit, le réseau est maintenu stable, grâce au système de contrôle très performant, via les deux les convertisseurs VSC_26 et VSC_29. Ce cas de test B2/ montre la très bonne capacité de résistance du l'installation linéaire PV en cas de court-circuit au réseau AC (S4). Le convertisseur VSC_26 est très impacté par le court-circuit car proche du nœud 26 où est le point de court-circuit. Le convertisseur VSC_26 participe très activement à fournir la puissance réactive pour remonter la tension au nœud de raccordement. Après le court-circuit, les deux convertisseurs VSC_26 et VSC_29 fonctionnent normalement.

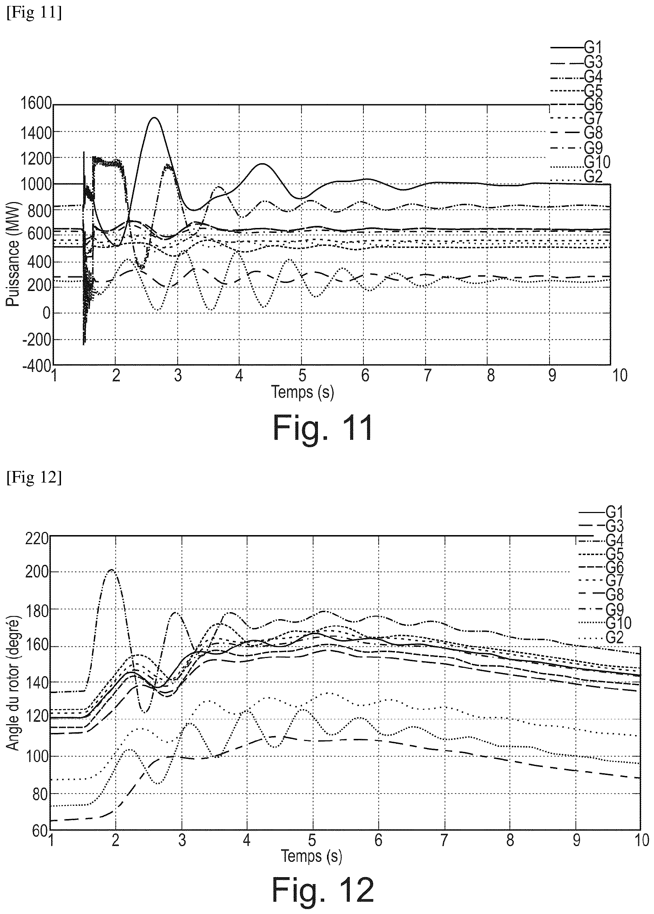

Les figures 11, 12, 13 illustrent respectivement dans ce cas de test B2/, la variation de puissance des générateurs, de l'angle rotorique et de la vitesse des machines synchrones.

L'angle rotorique ainsi que la vitesse des machines synchrones G1 à G10 sont donc stabilisés.

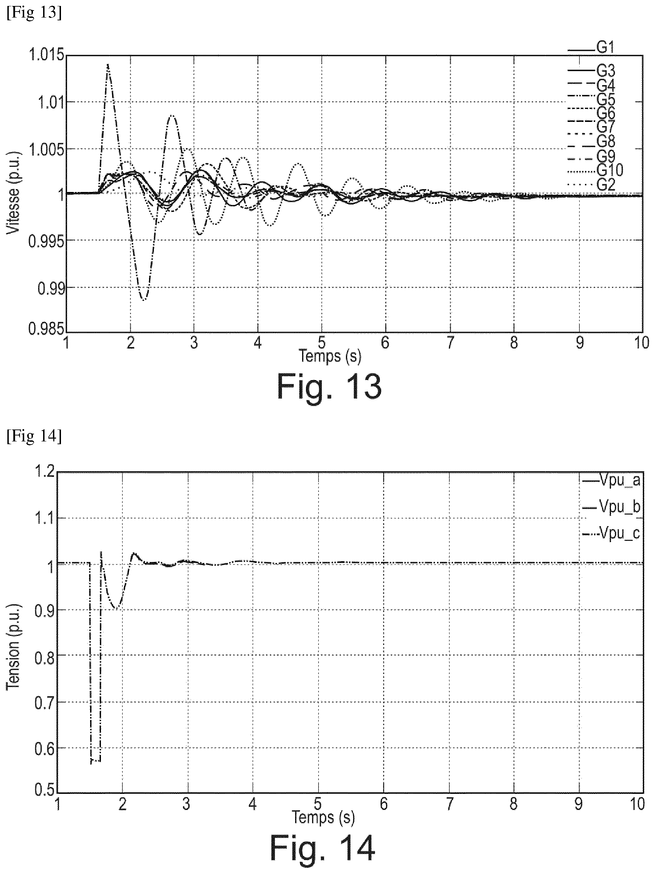

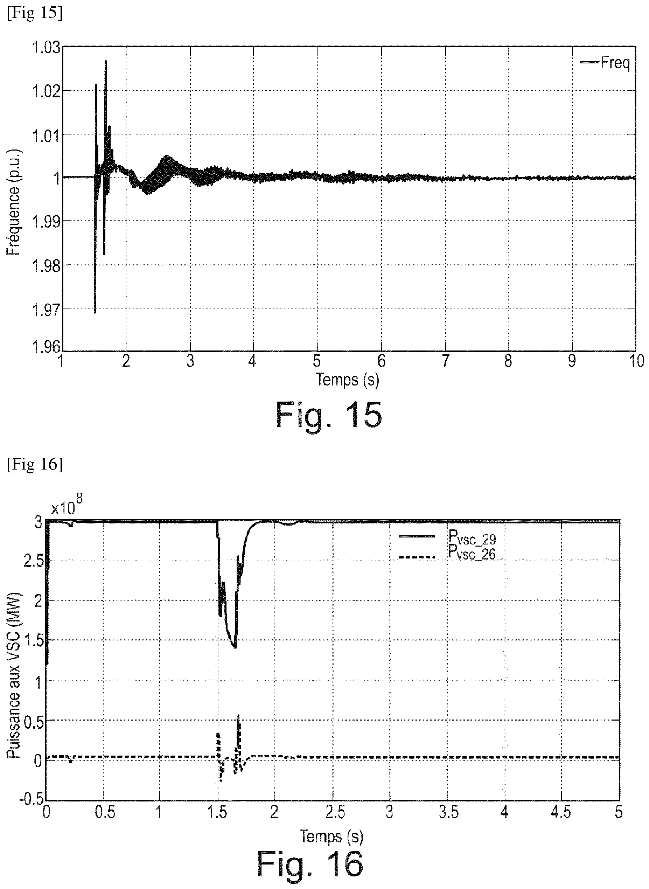

On observe également la stabilité de tension (figure 14) et la stabilité de fréquence (figure 15). Le service (S3) est donc assuré par le réseau DC de l'installation linéaire, de par leur contribution au réglage de fréquence (S1) et de tension (S2).

B3/ On considère ici le réseau DC d'une installation PV linéaire avec les six groupes PV, qui injecte une puissance avec une répartition de 300 MW sur VSC_26 connecté au nœud 26 et 0 MW sur VSC_29 connecté au nœud 29.

La figure 16 illustre la variation des puissances actives de VSC_26 connecté au nœud 26 et VSC_29 connecté au nœud 29.

On constate donc, qu'en cas de court-circuit, le réseau est maintenu stable, grâce au système de contrôle très performant, via les deux les convertisseurs VSC_26 et VSC_29. Ce cas de test B3/ montre la très bonne capacité de résistance des installations linéaires PV en cas de court-circuit au réseau AC (S4). Le convertisseur VSC_26 est très impacté par le court-circuit car proche du nœud 26 où est le point de court-circuit. Le convertisseur VSC_26 participe très activement à fournir la puissance réactive pour remonter la tension au nœud de raccordement. Après le court-circuit, les deux convertisseurs VSC_26 et VSC_29 fonctionnent normalement.

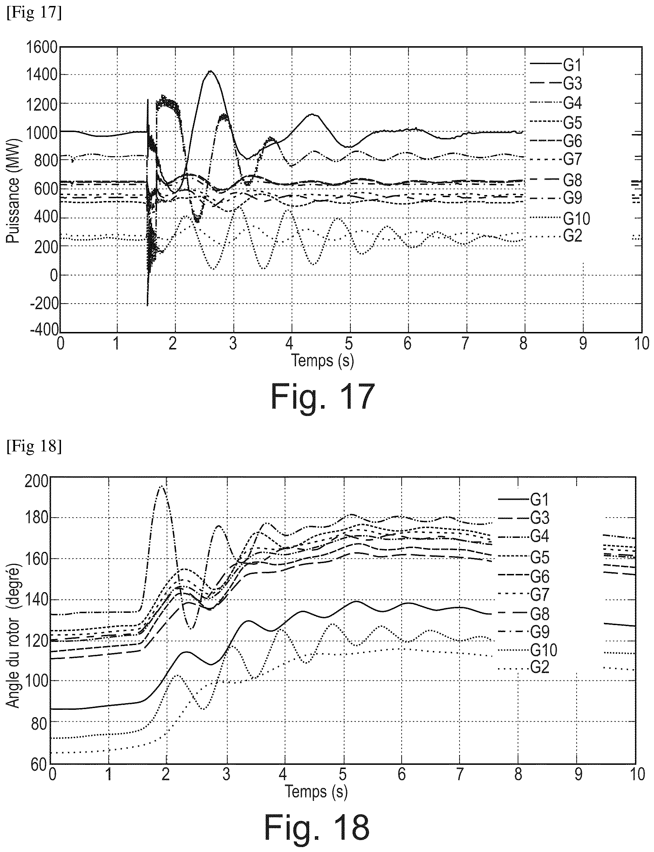

Les figures 17, 18, 19 illustrent respectivement dans ce cas de test B3/, la variation de puissance des générateurs, de l'angle rotorique et de la vitesse des machines synchrones.

L'angle rotorique ainsi que la vitesse des machines synchrones G1 à G10 sont donc stabilisés.

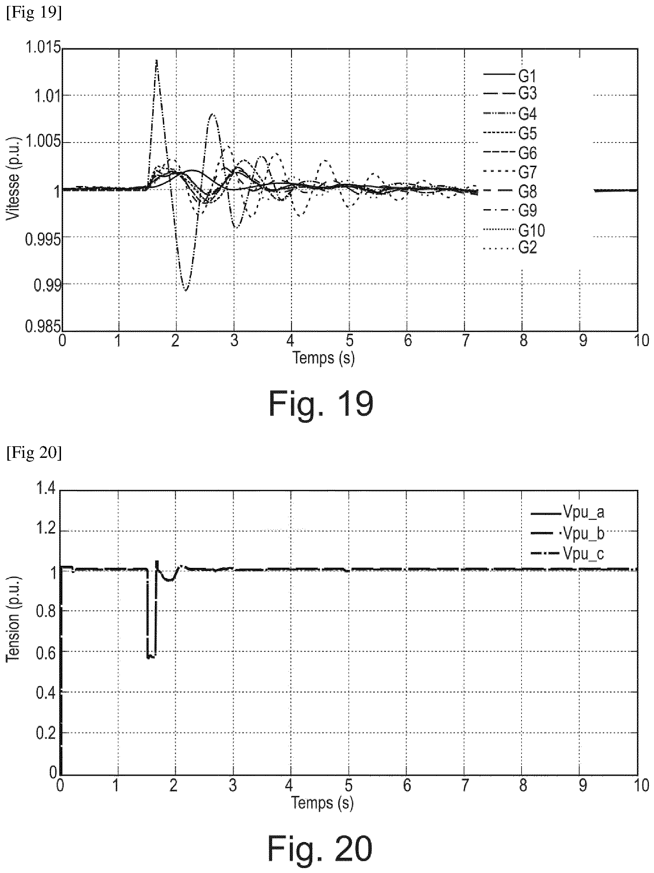

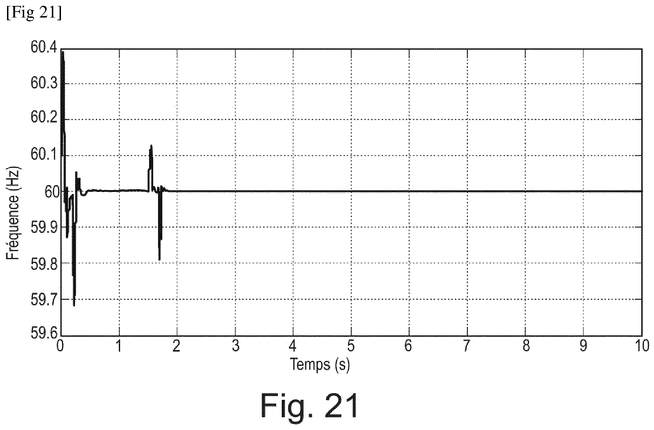

On observe également la stabilité de tension (figure 20) et la stabilité de fréquence (figure 21). Le service (S3) est donc assuré par le réseau DC de l'installation linéaire PV, de par leur contribution au réglage de fréquence (S1) et de tension (S2).

Les résultats des tests B2/ et B3/ montrent la capacité de support de l'installation linéaire PV, quelle que soit les puissances différenciées injectées aux convertisseurs VSC, pour atténuer les oscillations face aux perturbations, en cas de court-circuit.

L'invention n'est pas limitée aux exemples qui viennent d'être décrits ; on peut notamment combiner entre elles des caractéristiques des exemples illustrés au sein de variantes non illustrées.

D'autres variantes et modes de réalisation peuvent être envisagés sans pour autant sortir du cadre de l'invention.

### Liste des références citées

[1]: T. Athay, R. Podmore, and S. Virmani. "A Practical Method for the Direct Analysis of Transient Stability". In: IEEE Transactions on Power Apparatus and Systems PAS-98 (2 Mar. 1979), pp. 573-584.
[2]: M. A. Pai. "Energy function analysis for power system stability". The Kluwer international series in engineering and computer science. Power electronics and power systems. Boston: Kluwer Academic Publishers, 1989.

## Revendications

1. Architecture électrique comprenant :
- au moins une installation linéaire comprenant au moins un groupe de panneaux photovoltaïques (PV) (10) adapté pour produire une puissance totale maximale P, et un réseau de courant continu (DC) (2) comprenant au moins un bus (20, 21) auquel sont connectées en parallèle électrique le(s) groupes de panneaux PV par l'intermédiaire chacun d'un convertisseur DC/DC (11),
- un réseau de transport (3) et/ou de distribution (4) alternatif (AC),
- au moins deux convertisseurs en source de tension (22) (VSC), un des deux convertisseurs reliant le bus DC à un premier nœud du réseau AC, l'autre des deux convertisseurs reliant le bus DC à un deuxième nœud du réseau AC, distinct du premier nœud, chacun des convertisseurs VSC étant adapté pour injecter de 0 à une valeur supérieure à 100% de la puissance P dans le réseau AC, au moins un des convertisseurs étant bidirectionnel
- un système de contrôle adapté pour déterminer la puissance à transporter entre le réseau DC depuis les convertisseurs VSC et le réseau AC, en fonction des besoins et/ou des régimes de fonctionnement de ce dernier.

2. Architecture selon la revendication 1, le réseau DC de l'installation linéaire PV comprenant au moins un bus de haute tension en courant continu (HVDC), et relié au bus de moyenne tension en courant continu (MVDC) et à un convertisseur en source de tension (22) (VSC) relié à un nœud du réseau AC.

3. Architecture selon la revendication 1 ou 2, le réseau DC absorbant à l'un des premier ou deuxième nœuds, au moins une partie de la puissance du réseau AC en cas de défaillance de celui-ci entre le premier et deuxième nœuds, par exemple en cas de perte d'une ligne AC.

4. Architecture selon la revendication 3, les convertisseurs VSC étant des convertisseurs modulaires multiniveaux (MMC) et/ou bidirectionnels et/ou dimensionnés pour assurer l'absorption de la partie de puissance du réseau AC.

5. Architecture selon l'une des revendications précédentes, les convertisseurs étant contrôlés selon un mode de contrôle de puissance injectée et de la tension au point de connexion du réseau (P-Vac : AC) ou selon un mode de contrôle de puissance active et réactive injectées au réseau AC (P-Q) ou selon un mode de contrôle de la tension du bus DC et de puissance réactive (Vdc-Q) ou selon un mode de contrôle de la tension au point de connexion et de la fréquence du réseau AC (Vac/f).

6. Architecture selon l'une des revendications précédentes, le bus (20) auquel sont directement connectées en parallèle électrique le(s) groupes de panneaux PV étant un bus de moyenne tension en courant continu (MVDC).

7. Architecture selon la revendication 6, le bus MVDC étant connecté au réseau de distribution AC et/ou réseau de transport AC.

8. Architecture selon l'une des revendications précédentes, le réseau DC de l'installation linéaire PV comprenant un bus de haute tension en courant continu (HVDC) et connecté seulement au réseau de transport AC.

9. Architecture selon l'une des revendications précédentes, comprenant plusieurs charges réparties géographiquement, telles que des stations de recharge de véhicules électriques à grande puissance ou des électrolyseurs pour l'alimentation de véhicules fonctionnant à l'hydrogène, reliées chacune par l'intermédiaire d'un convertisseur DC/DC (23) au bus MVDC.

10. Architecture selon l'une des revendications 5 à 9, comprenant plusieurs moyens de stockage électrique répartis géographiquement, tels que des batteries, reliés chacun par l'intermédiaire d'un convertisseur DC/DC (23) au bus MVDC.

11. Architecture selon l'une des revendications 5 à 10, comprenant d'autres sources de courant réparties géographiquement, telles que des éoliennes, reliées chacune par l'intermédiaire d'un convertisseur DC/DC (23) au bus MVDC.

12. Architecture selon l'une des revendications précédentes, le système étant connecté au système de contrôle et d'acquisition de données en temps réel (SCADA) du réseau AC.

13. Architecture selon l'une des revendications précédentes, comprenant des moyens de mesure de tension et/ou de fréquence aux premier et deuxième nœuds, reliés au système de contrôle de sorte qu'il répartisse la puissance à transporter la puissance à transporter entre le réseau DC depuis les convertisseurs VSC et le réseau AC en fonction des mesures effectuées.
